# FASCICULE DE BREVET EUROPEEN

(11) **EP 2 681 069 B1**
(45) Date de publication et mention de la délivrance du brevet: **12.08.2015**
(21) Numéro de dépôt: 12711944.4
(22) Date de dépôt: 28.02.2012
(51) Int. Cl.: B60L 11/18, H02J 7/00

(54) **SYSTEME DE CHARGE POUR VEHICULES ELECTRIQUES OU HYBRIDES SUR TOUTE SOURCE A COURANT ALTERNATIF**
LADESYSTEM FÜR ELEKTRO- ODER HYBRIDFAHRZEUGE MIT EINER BELIEBIGEN WECHSELSTROMQUELLE
CHARGING SYSTEM FOR ELECTRIC OR HYBRID VEHICLES USING ANY SOURCE OF ALTERNATING CURRENT

(30) Priorité: 02.03.2011 FR 1151693
(43) Date de publication de la demande: 08.01.2014
(73) Titulaire: Peugeot Citroën Automobiles SA, 78140 Vélizy Villacoublay (FR)
(72) Inventeur: MORAND, Nicolas, F-92400 Courbevoie (FR); COMBES, Emmanuel, F-91410 St Cyr Sous Dourdan (FR)
(86) Numéro de dépôt international: PCT/FR2012/050404
(87) Numéro de publication internationale: WO 2012/117192

(56) Documents cités:
- DE-A1-102008 042 677
- US-A1- 2010 174 667

## Description

L'invention concerne un système de charge pour batterie de véhicule hybride ou électrique. Elle apporte plus particulièrement une amélioration aux systèmes de rechargement électrique de tels véhicules.

Dans un contexte global de diminution des réserves en énergie fossile, et d'un accroissement des risques liés à l'effet de serre et au réchauffement climatique, les constructeurs automobiles développent des véhicules dits électriques, dont le fonctionnement repose exclusivement sur un moteur électrique, et des véhicules dits hybrides, dont le fonctionnement repose typiquement sur un moteur électrique conjointement à un moteur thermique.

Les véhicules électriques ou hybrides embarquent typiquement une batterie nécessaire à l'alimentation du moteur et des organes électriques, et requièrent de pouvoir être connectés à des dispositifs d'alimentation électrique publiques ou privées, permettant de recharger la batterie. Une telle connexion est d'autant plus nécessaire pour les véhicules électriques, pour lesquels lesdits dispositifs constituent le seul moyen de rechargement de la batterie.

Les bornes constituent des points de charge, certaines d'entre eux délivrant un courant alternatif, et d'autres délivrant un courant continu. Dans le cas où celles-ci délivrent un courant alternatif, celui-ci peut être directement issu d'une tension alternative délivrée par le réseau électrique local, moyennant la mise en oeuvre de dispositifs de protection, de limitation et de facturation adéquats. La présente invention concerne particulièrement les modes de chargement basés sur un courant alternatif.

Différents modes de charge sont notamment définis par le projet de norme internationale ISO/CEI 61851-1, dans laquelle quatre modes de charge sont définis, dont les trois suivants sont basés sur un courant alternatif : le mode 1, dans lequel le rechargement est réalisé via une prise de courant conventionnelle, par exemple d'un réseau électrique domestique ; le mode 2, dans lequel le rechargement est réalisé via une prise de courant conventionnelle, par exemple d'un réseau électrique domestique, par l'intermédiaire d'un boitier situé sur le câble reliant la prise au véhicule ; le mode 3, dans lequel le rechargement est réalisée via une borne de rechargement spécifique publique ou privée, dont la structure est plus complexe que celle d'une prise de courant conventionnelle.

Le projet de norme ISO/CEI 61851-1 précité définit également un système de résistances de codage, permettant d'indiquer au véhicule ou à la borne de recharge, une intensité maximale de courant électrique que la borne de recharge peut délivrer. La valeur d'intensité maximale est notamment adaptée à la section du câble de connexion, disposé entre la prise de courant ou la borne de recharge selon le mode de recharge, et le véhicule. La résistance de codage peut être intégrée dans le câble de connexion, par exemple dans un connecteur du câble. Par exemple, quatre valeurs de résistance de codage peuvent correspondre à quatre valeurs d'intensité maximale : une résistance de codage de 1,5 kΩ correspond à une intensité maximale de 13 A, une résistance de codage de 680 Ω à une intensité maximale de 20 A, une résistance de codage de 220 Ω à une intensité maximale de 32 A, et une résistance de codage de 100 Ω à une intensité maximale de 63 A en triphasé ou 70 A en monophasé. La recharge de la batterie est typiquement pilotée par un dispositif de charge, adaptant la charge de la batterie en fonction de l'intensité maximale.

Dans le mode 1 précité, le câble de rechargement comporte une unique résistance de codage, par exemple disposée dans le connecteur à brancher sur le véhicule. Dans les modes 2 et 3 précités, le câble de rechargement comporte deux résistances de codage, l'une étant par exemple disposée dans le connecteur à brancher sur le véhicule, l'autre étant par exemple disposée dans le connecteur à brancher sur la borne de recharge.

Dans le cas du mode 3 précité, la borne de recharge ne fournit une tension d'alimentation que si une communication adéquate est établie sur une "ligne pilote", ce terme désignant un réseau de communication simple entre la borne de recharge et le véhicule, dont le médium est formé par un fil dédié dans le câble de rechargement et le fil de terre de ce câble. Cette communication permet également à la borne de recharge d'indiquer au véhicule quelle est l'intensité maximale du courant qu'elle peut fournir.

Dans le cas du mode 1 précité, le véhicule ne doit pas consommer un courant électrique dont l'intensité est supérieure à l'intensité maximale du courant que les prises de courant, notamment les prises du réseau domestique, peuvent délivrer. Cette valeur d'intensité maximale dépend de la zone géographique dans laquelle la prise est située, différents pays disposant notamment de réseaux électriques dont les caractéristiques de performances diffèrent. La valeur d'intensité maximale dépend également de la nature du réseau électrique domestique : par exemple de l'état et/ou de la génération des câbles sur lesquels celui-ci s'appuie. En conséquence, il est généralement nécessaire de limiter l'intensité du courant électrique requis par le véhicule à la valeur d'intensité maximale correspondant à la zone géographique dans laquelle celle-ci est la plus faible, au détriment du temps de rechargement du véhicule dans les zones géographiques où l'intensité maximale est plus élevée.

En outre, un inconvénient des systèmes de recharge connus, est lié au fait qu'ils ne permettent pas la recharge de véhicules équipés d'un connecteur par exemple dédié aux modes 2 et 3 précités, en utilisant le mode 1 de recharge précité via le même connecteur. Or il peut s'avérer avantageux de pouvoir procéder à la connexion d'un véhicule compatible avec le mode 2 ou 3, à une simple prise de courant, et pouvoir ainsi effectuer le rechargement du véhicule en mode 1. Pour des raisons de sécurité, le rechargement ne peut s'effectuer dans de telles conditions, que si l'utilisateur le signifie au système formé par la borne et le véhicule, c'est-à-dire via des éléments d'interface homme-machine, au prix d'inconvénients liés à l'ergonomie et à la simplicité d'utilisation du système.

L'invention vise notamment à remédier au moins aux inconvénients précités, en proposant une amélioration des systèmes de charge en courant alternatif des véhicules électriques et hybrides. La présente invention propose notamment de définir des valeurs de résistance de codage additionnelles, ainsi qu'un système de mesure de résistance perfectionné, afin de permettre, en préservant des conditions optimales de sécurité et de performances quels que soient la situation géographique et l'état (dégradé ou non) du réseau électrique, la recharge en mode 1 ou en mode 3 via un même connecteur du véhicule. Plus précisément, la présente invention permet de définir, notamment pour un fonctionnement du type mode 1 précité, une information sur l'intensité maximale du courant électrique en fonction de la zone géographique et/ou l'état du réseau électrique, ainsi que de fournir à un véhicule compatible du mode 2 ou 3 précité, une information selon laquelle l'utilisateur souhaite effectuer un rechargement en mode 1 via une prise de courant simple du réseau électrique.

Il est à noter ici que le projet de norme ISO/CEI 61851-1 précité est évoqué à titre d'exemple non limitatif de l'invention, et que des modes de recharge identiques et similaires aux modes décrits précédemment peuvent être définis dans d'autres documents normatifs ou réglementaires. La présente invention peut également s'appliquer à de tels modes de recharge.

A cet effet, l'invention a pour objet un système de charge pour batterie d'un véhicule, comprenant :
- un dispositif de charge de la batterie, pouvant connecter la batterie à une prise d'une borne de recharge délivrant un courant alternatif, via un câble de connexion équipé d'un connecteur adapté à une prise disposée sur le véhicule, ledit câble comprenant une résistance de codage présentant une valeur de résistance parmi une pluralité de valeurs prédéterminées,
- un dispositif de mesure de résistance délivrant au dispositif de charge un signal représentatif de ladite valeur de la résistance de codage,
le système de charge étant caractérisé en ce que le dispositif de charge est configuré pour adapter la charge de la batterie en fonction d'une information de la valeur d'intensité maximale du courant qu'il peut consommer définie par la valeur minimale de l'intensité maximale définie par la section du câble de connexion et de l'intensité maximale autorisée par un réseau électrique local d'une zone géographique donnée, et d'une information de type variable booléenne relative au chargement du véhicule dans un mode de charge par connexion directe à une prise de courant dudit réseau électrique local, chaque valeur prédéterminée de la résistance de codage correspondant à une définition donnée desdites informations.

Dans un mode de réalisation de l'invention, le dispositif de mesure de résistance peut être formé par un pont diviseur de tension alimenté par une tension maximale connue Vmax et formé par la résistance de codage de résistance électrique RP et une résistance de gamme de résistance électrique RG, la tension de sortie du pont diviseur étant convertie en une valeur numérique Vnum par un convertisseur analogique-numérique, des moyens de traitement compris dans le dispositif de mesure de résistance étant configurés pour déterminer la valeur de la résistance de codage suivant la relation : RP=RG*Vnum/(Vmax-Vnum).

Dans un mode de réalisation de l'invention, la résistance de gamme peut être formée par une parmi une pluralité de résistances de gamme intermédiaires de résistances électriques RGi, un sélecteur électronique piloté par lesdits moyens de traitement déterminant la résistance de gamme appropriée en mettant en oeuvre un algorithme de sélection réalisant :
- une première mesure avec la résistance de gamme intermédiaire dont la valeur de résistance électrique est la plus faible, puis de réaliser une mesure de la résistance de codage conduisant à une valeur numérique Vnum),
- une comparaison de ladite valeur numérique Vnum à une valeur de seuil prédéterminée,
- si la valeur numérique Vnum excède ladite valeur de seuil prédéterminée, une nouvelle mesure de la résistance de codage avec la résistance de gamme intermédiaire dont la valeur de résistance est immédiatement supérieure à la résistance de résistance de gamme intermédiaire utilisée dans la mesure précédente,
- une mesure de la résistance de codage avec toutes les valeurs de la résistance de gamme intermédiaire, jusqu'à ce que la valeur numérique Vnum soit inférieure à ladite valeur de seuil prédéterminée ou que la résistance de gamme ait déjà pris toutes les valeurs possibles, la valeur numérique Vnum étant alors désignée Vresult, et la résistance de codage déterminée suivant la relation : RP=RG*Vresult/(Vmax-Vresult).

Dans un mode de réalisation de l'invention, ladite valeur de seuil prédéterminée peut être définie comme le produit de ladite tension maximale connue Vmax par un coefficient Cmaxi positif et strictement inférieur à 1, déterminé en fonction du rang de la résistance de gamme intermédiaire considérée, de la gamme des valeurs de la résistance de codage et du nombre et des valeurs de la résistance de gamme.

Dans un mode de réalisation de l'invention, ledit câble de connexion peut comprendre une pluralité de résistances de codage de valeurs différentes, et un commutateur manuel permettant à un utilisateur de sélectionner une valeur déterminée de résistance de codage parmi lesdites valeurs différentes.

Dans un mode de réalisation de l'invention, le commutateur manuel peut être formé par un commutateur rotatif à une pluralité N de positions permettant la sélection d'une valeur de résistance de codage parmi N valeurs disponibles.

Dans un mode de réalisation de l'invention, le commutateur manuel peut être formé par un commutateur rotatif à une pluralité N positions permettant la sélection d'une valeur de résistance de codage parmi N valeurs disponibles, avec une résistance toujours connectée, les valeurs de résistance de codage étant déterminées par la mise en parallèle de la dite résistance toujours connectée et d'une résistance disposée en parallèle par ledit commutateur rotatif, ledit commutateur rotatif ayant également une position dans laquelle il ne dispose aucune résistance en parallèle.

Dans un mode de réalisation de l'invention, ledit câble de connexion comprend en outre des moyens d'affichage affichant au moins l'information de zone géographique et/ou d'état de l'installation électrique associée à la valeur de résistance de codage sélectionnée.

Un autre avantage de l'invention est qu'un système de charge selon les modes de réalisation décrits, demeure compatible avec les bornes de recharge existantes.

Un autre avantage de l'invention est qu'un système de charge selon les modes de réalisation décrits, permet par exemple le rechargement en mode 1 d'un véhicule comportant un connecteur prévu pour les modes 2 et 3 précités.

L'invention sera mieux comprise et d'autres avantages apparaîtront à la lecture de la description détaillée d'un mode de réalisation donné à titre d'exemple, description illustrée par les figures jointes parmi lesquelles :
- la figure 1 représente un schéma illustrant de manière synoptique le fonctionnement d'un système de charge pour batterie de véhicule ;
- la figure 2 représente un schéma illustrant de manière synoptique un module de mesure de la résistance de codage, selon un mode de réalisation de l'invention ;
- la figure 3 représente un logigramme illustrant le principe de fonctionnement de la mesure de la résistance de codage, selon un mode de réalisation de l'invention.

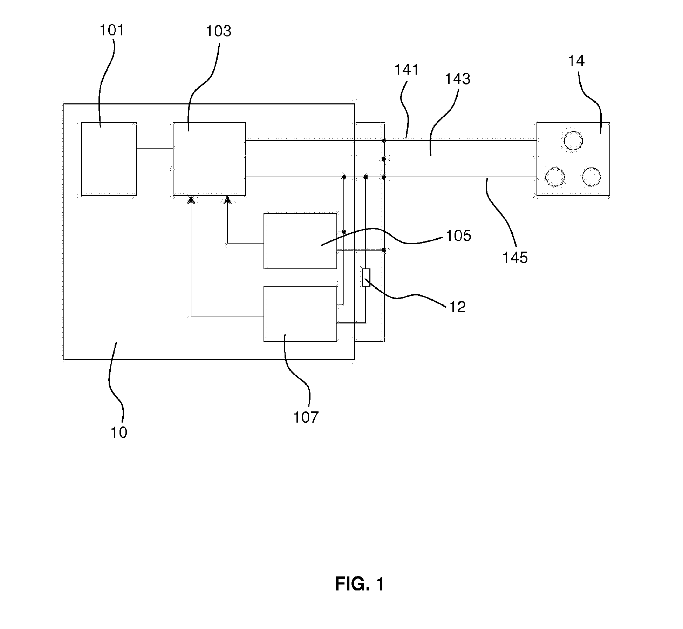

La figure 1 présente un schéma illustrant de manière synoptique le fonctionnement d'un système de charge pour batterie de véhicule.

Un bloc fonctionnel 10 représente un véhicule comprenant notamment une batterie 101, un dispositif de charge 103 réalisant une interface entre la batterie 101, et une prise de courant 14, par exemple disposée sur une borne de recharge, ou bien sur un réseau électrique de type réseau électrique domestique. Le dispositif de charge 103 traite également des informations délivrées sous la forme de signaux appropriés par un dispositif de gestion de ligne pilote 105 et un dispositif de mesure de résistance 107. Le dispositif de mesure de résistance 107 permet une mesure d'une résistance de codage 12, par exemple disposée dans le connecteur du câble permettant la connexion du véhicule à la borne de recharge par l'intermédiaire de prise de courant 14. Dans l'exemple illustré par la figure 1, le véhicule est connecté à la prise de courant 14 par un câble de connexion comprenant au moins un fil de phase 141, un fil de neutre 143 et un fil de terre 145. Par exemple, pour un fonctionnement suivant le mode 1 précité ou un mode équivalent, le câble comporte les trois fils 141, 143, 145, avec éventuellement deux fils de phases supplémentaires. Pour les modes 2 et 3 précités ou des modes équivalents, le câble peut comporter un fil supplémentaire dédié à la ligne pilote. L'exemple illustré par la figure 1 correspond à un mode 1 ou équivalent, ainsi le dispositif de gestion de ligne pilote 105 n'est pas connecté au connecteur ou au câble de connexion.

Un système de charge au sens de la présente invention, peut notamment comprendre le dispositif de charge 103 et le dispositif de mesure de résistance 107.

Selon une spécificité de la présente invention, il est proposé de définir des valeurs de résistance de codage supplémentaires, par rapport aux quatre valeurs citées à titre d'exemple précédemment. Ainsi que cela est précisé ci-avant, les valeurs supplémentaires permettent de définir une information sur l'intensité maximale du courant électrique en fonction de la zone géographique et/ou l'état du réseau électrique et/ou tout autre paramètre que l'homme de l'art jugera pertinent, ainsi que de fournir à un véhicule compatible avec le mode 2 ou 3 précité, une information à la borne de recharge, selon laquelle l'utilisateur souhaite effectuer un rechargement en mode 1 via une prise de courant simple du réseau électrique.

Les valeurs supplémentaires de résistance de codage peuvent être des valeurs intermédiaires aux valeurs connues, et/ou des valeurs plus élevées que la valeur maximale connue (typiquement : 1,5 kΩ) et/ou des valeurs moins élevées que la valeur minimale connue (typiquement : 100 Ω).

Le tableau 1 présenté ci-après fournit un exemple de valeurs de résistance de codage applicables, associées à des valeurs de tolérances et de puissance fournies également à titre d'exemple; ainsi que la mention du rechargement en mode 1 ou non, cette mention étant représentée par une information de type variable booléenne. Le courant maximal du câble et de la zone géographique, objet de la première colonne du tableau 1, correspond à la plus petite valeur des deux courants :

**Tableau 1**

| **Courant maximal du câble et de la zone géographique** | **Mode 1** | **Résistance de codage / tolérance +/- 3%** |
|---|---|---|
| 8 A | oui | 10 kΩ, 0,25 W |
| 10 A | oui | 6,8 kΩ, 0,25 W |
| 13 A | oui | 4,7 kΩ 0,25 W |
| 8 A | non | 3,3 kΩ 0,25 W |
| 10 A | non | 2,2 kΩ 0,25 W |
| 13 A | non | 1,5 kΩ, 0,5 W |
| 20 A | non | 680 Ω 0,5 W |
| 32 A | non | 220 Ω 0,5 W |
| 63 A (triphasé) / 70 A (monophasé) | non | 100 Ω 0,5 W |

La détermination de la résistance de codage par le dispositif de mesure de résistance 107 peut ainsi donner lieu à une communication d'un signal représentatif de cette dernière au module de charge 103, pouvant alors adapter la charge du véhicule en fonction des informations d'intensité maximale et de charge en mode 1 correspondant à la valeur de résistance de la résistance de codage RP.

Il est à noter que physiquement, un câble de connexion en mode 1 pour un véhicule initialement prévu pour un rechargement en mode 2 ou 3, est différent d'un câble de connexion pour un rechargement en mode 2 ou 3 de ce véhicule, en particulier, dans le cas du mode 3, en terme de modèle de prise du côté de la borne de recharge. En dehors des considérations quant à la zone géographique, un véhicule pouvant se recharger via la même prise côté véhicule en mode 1, 2 ou 3, doit ainsi comporter autant de câbles de connexion que desdits modes : un câble pour le mode 1, un câble pour le mode 2 et un câble pour le mode 3. Le câble de connexion pour le mode 1 est donc spécifique et peut, à ce titre, comporter une valeur de résistance de codage spécifique, indiquant au véhicule qu'il opère dans le cas d'un rechargement en mode 1 par sa prise mode 1, 2 ou 3. Ainsi, dans un tel cas, l'utilisateur indique le mode 1 au véhicule par le choix dudit câble de connexion spécifique.

Il est également à observer que selon la présente invention, chaque valeur de résistance de codage assure simultanément trois fonctions : le codage du courant lié à la section du câble, le codage de courant lié à la zone géographique et à l'état du réseau, ainsi que l'indication du mode de recharge.

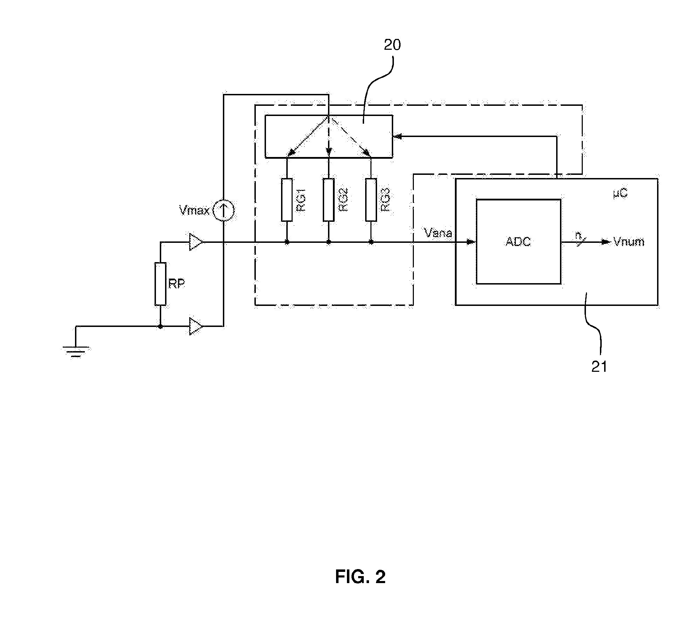

Afin de permettre une détermination précise de la résistance de codage, en raison des valeurs additionnelles proposées, la présente invention propose avantageusement un module de mesure de la résistance de codage perfectionné, dont un exemple de mode de réalisation est décrit ci-après en référence à la figure 2.

La figure 2 présente un schéma illustrant de manière synoptique un module de mesure de la résistance de codage, selon un mode de réalisation de l'invention.

Selon une méthode en elle-même connue de l'état de la technique, il est possible de réaliser une mesure de résistance de la résistance de codage, désignée RP, consistant à alimenter un pont diviseur de tension avec une tension connue, désignée Vmax, ledit pont diviseur étant constitué d'une résistance de gamme connue RG et de la résistance RP à mesurer, à mesurer la tension de sortie Vana du pont diviseur, puis de convertir la tension de sortie Vana en valeur numérique Vnum, par exemple par un codage sur un nombre n de bits réalisé par un convertisseur analogique/numérique, communément désigné ADC suivant le sigle correspondant à la terminologie anglaise « Analog to Digital Converter ». La valeur de Vnum peut alors être traitée par des moyens de traitement appropriés, par exemple et sans limitation formés par un microcontrôleur, un microprocesseur ou un EPLD, suivant le sigle désignant la terminologie anglaise « Erasable Programmable Logic Device ». D'une manière typique, la valeur de la résistance de codage RP peut alors être fournie par la relation : RP=RG*Vnum/(Vmax-Vnum).

Afin de traiter toute la gamme des valeurs possibles de résistances, la gamme de tensions d'entrée de l'ADC doit aller de 0 V à Vmax, ces tensions étant mesurées par rapport à la terre, à laquelle est connectée l'une des broches de la résistance de codage RP.

Dans le cadre de la présente invention, la gamme des valeurs de résistances peut être étendue, en raison de l'ajout de valeurs hautes ou basses selon l'invention. Par exemple et sans limitation, la résistance de codage RP peut être comprise entre 100 Ω et 10 kΩ. Pour une valeur de la résistance de gamme RG élevée, la précision de mesure par l'ADC peut être faible pour des petites valeurs de la résistance de codage RP, car celles-ci n'ont que peu d'effet sur la tension de sortie du pont diviseur Vana, et pour une valeur faible de la résistance de gamme RG, la précision de mesure par l'ADC peut être faible pour de grandes valeurs de la résistance de codage RP, pour la même raison.

La présente invention propose avantageusement de pallier cet inconvénient, en disposant d'un système de sélection automatique de gammes de valeurs, consistant à faire automatiquement varier la résistance de gamme RG en fonction de la résistance de codage RP. A cette fin, le module de mesure de résistance peut comprendre un sélecteur électronique 20 permettant de choisir la bonne valeur de la résistance de gamme RG, parmi une pluralité de valeurs de résistances de gamme intermédiaire RGi. Dans l'exemple illustré par la figure 2, un nombre 3 de valeurs peut être défini par les résistances de gamme intermédiaires RG1, RG2 et RG3 telles que RG1 < RG2 < RG3.

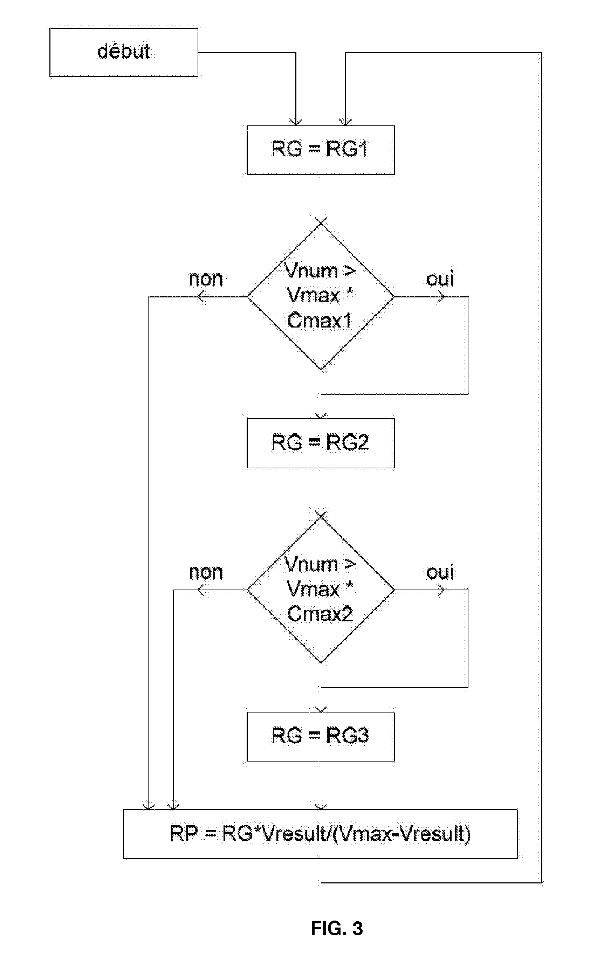

Le sélecteur électronique 20 peut être piloté par un microcontrôleur 21, dans lequel est notamment mis en oeuvre le traitement de la valeur numérique Vnum évoquée précédemment. Le pilotage du sélecteur électronique 20 peut être réalisé suivant un algorithme de sélection dont la figure 3 illustre un exemple, décrit ci-après.

Le principe de l'algorithme de sélection est de réaliser une (ou plusieurs) première(s) mesure(s) avec la valeur la plus faible de résistance de gamme intermédiaire RG1, puis :
- de réaliser une mesure de la résistance de codage RP conduisant à une valeur numérique Vnum,
- de comparer la valeur numérique Vnum à une valeur de seuil prédéterminée,
- si la valeur numérique Vnum excède ladite valeur de seuil prédéterminée, de réaliser à nouveau une (ou plusieurs) mesure(s) avec la valeur de RG correspondant à la résistance de gamme intermédiaire de rang immédiatement supérieur RG2,
- de procéder de la même manière pour toutes les valeurs de résistance des résistances de gamme intermédiaires RGi,
- dès que la valeur numérique Vnum est inférieure à la valeur prédéterminée ou que la résistance de gamme a déjà pris toutes les valeurs possibles, la valeur numérique Vnum pouvant alors être désignée Vresult, de considérer que la résistance de gamme intermédiaire RGi est appropriée, et à déterminer la valeur de RP, suivant la relation : RP=RG*Vresult/(Vmax-Vresult).

L'algorithme de sélection reprend à son début pour traiter tout changement de valeur de la résistance de codage RP, par exemple pour traiter les connexions du véhicule électrique, ses déconnexions et les changements de câble.

La valeur de seuil précitée peut par exemple être définie comme le produit de la tension maximale Vmax par un coefficient Cmaxi positif et strictement inférieur à 1, calculé en fonction du rang (entre 1 et le nombre de résistances de gamme) de la comparaison considérée, de la gamme des valeurs de la résistance de codage RP et du nombre et des valeurs RGi de la résistance de gamme RG. Par exemple, pour des résistances de codage RP pouvant prendre les valeurs de 100 Ω, 220 Ω, 680 Ω, 1,5 kΩ, 2,2 kΩ, 3,3 kΩ et 4,7 kΩ et des résistances de gamme RG au nombre de deux et de valeurs respectives 1 kΩ et 4,7 kΩ, Cmaxi peut être pris égal à 0,7, de sorte que la résistance de gamme RG de 1 kΩ soit pertinente pour les mesures de résistances de codage RP allant de 100 Ω à 680 Ω et que la résistance de gamme RG de 4,7 kΩ soit pertinente pour les autres mesures de résistances de codage RP.

Il est à noter qu'un des avantages procurés par la présente invention, est que celle-ci permet de résoudre, pour la charge des véhicules électriques, la contradiction entre le gain en sûreté de fonctionnement dû à l'ajout de résistances permettant d'indiquer au véhicule qu'il doit se charger en mode 1, et les risques en sûreté de fonctionnement dus à la mesure de la résistance de codage RP en présence d'un plus grand nombre de valeurs possibles, en proposant un circuit adapté de sélection automatique de gamme.

Il est rappelé ici que si un véhicule compatible avec les modes 2 et/ou 3 se chargeait en mode 1, donc en l'absence de ligne pilote, et sans la mise en oeuvre de l'invention, alors un risque en sûreté de fonctionnement apparaîtrait, car le véhicule serait alors dans la même situation en mode 2 ou 3 en présence de certains défauts de la ligne pilote, qu'il interprèterait alors comme le mode 1.

En adoptant une répartition des prises de courant par zones géographiques, il est possible de disposer d'un câble avec un type physique de prise de courant par zone. Par exemple, certaines prises domestiques sont différentes entre la France et la Suisse et le courant maximal au niveau de ces prises est plus élevé en France qu'en Suisse. Il est donc possible d'associer un câble de rechargement par pays et ce câble peut comporter une résistance de codage côté véhicule donnant la valeur de courant dans ledit pays.

Avantageusement, le câble de connexion du véhicule à la borne, par exemple au niveau du connecteur à la prise côté véhicule, peut comprendre un commutateur manuel, permettant à l'utilisateur de commuter entre différentes valeurs de résistance de codage. Le commutateur manuel peut avantageusement être assorti de moyens d'affichage permettant à l'utilisateur de visualiser la valeur du courant correspondant à la résistance de codage spécifiée. L'affichage peut par exemple porter simplement sur l'information de la zone géographique ou sur le fait que le rechargement doive s'effectuer sur une installation électrique dégradée nécessitant une limitation appropriée du courant. Ce mode de réalisation avantageux peut notamment être particulièrement approprié si différentes zones géographiques disposent de connecteurs de prises identiques, mais avec des réseaux électriques dont les spécifications diffèrent.

Le commutateur manuel peut être formé par divers moyens en eux-mêmes connus de l'état de la technique, et peut par exemple être un commutateur rotatif à N positions. Celui-ci peut réaliser la fonction de commutation suivant diverses manières en elles-mêmes connues, ainsi que par exemple et sans limitation, par une sélection d'une résistance parmi N, éventuellement en parallèle avec une autre résistance toujours connectée. Dans un tel cas, le commutateur manuel peut présenter une position dans laquelle il n'ajoute aucune résistance en parallèle de la résistance toujours connectée. Une telle réalisation de la fonction présente l'avantage que pendant la commutation du bouton, la résistance du dispositif ne peut pas être infinie.

## Revendications

1. Système de charge pour batterie (101) d'un véhicule comprenant :
- un dispositif de charge (103) de la batterie (101) pouvant connecter la batterie (101) à une prise (14) d'une borne de recharge délivrant un courant alternatif, via un câble de connexion équipé d'un connecteur adapté à une prise disposée sur le véhicule, ledit câble comprenant une résistance de codage (RP) présentant une valeur de résistance parmi une pluralité de valeurs prédéterminées,
- un dispositif de mesure de résistance (107) délivrant au dispositif de charge (103) un signal représentatif de ladite valeur de la résistance de codage (RP),
le système de charge étant **caractérisé en ce que** le dispositif de charge (103) est configuré pour adapter la charge de la batterie (101) en fonction d'une information de la valeur d'intensité maximale du courant qu'il peut consommer définie par la valeur minimale de l'intensité maximale définie par la section du câble de connexion et de l'intensité maximale autorisée par un réseau électrique local d'une zone géographique donnée, et d'une information de type variable booléenne relative au chargement du véhicule dans un mode de charge par connexion directe à une prise de courant dudit réseau électrique local, chaque valeur prédéterminée de la résistance de codage correspondant à une définition donnée desdites informations.

2. Système de charge pour batterie (101) selon la revendication 1, **caractérisé en ce que** le dispositif de mesure de résistance (107) est formé par un pont diviseur de tension alimenté par une tension maximale connue (Vmax) et formé par la résistance de codage (RP) et une résistance de gamme (RG), la tension de sortie (Vana) du pont diviseur étant convertie en une valeur numérique (Vnum) par un convertisseur analogique-numérique (ADC), des moyens de traitement compris dans le dispositif de mesure de résistance (107) étant configurés pour déterminer la résistance de codage (RP) suivant la relation : RP=RG*Vnum/(Vmax-Vnum).

3. Système de charge pour batterie (101) selon la revendication 2, **caractérisé en ce que** la résistance de gamme (RG) est formée par une parmi une pluralité de résistances de gamme intermédiaires (RGi), un sélecteur électronique (20) piloté par lesdits moyens de traitement déterminant la résistance de gamme appropriée en mettant en oeuvre un algorithme de sélection réalisant :
- une première mesure avec la résistance de gamme intermédiaire (RG1) dont la valeur est la plus faible, puis de réaliser une mesure de la résistance de codage (RP) conduisant à une valeur numérique (Vnum),
- une comparaison de ladite valeur numérique (Vnum) à une valeur de seuil prédéterminée,
- si la valeur numérique (Vnum) excède ladite valeur de seuil prédéterminée, une nouvelle mesure de la résistance de codage (RP) avec la résistance de gamme intermédiaire (RG2) dont la valeur de résistance est immédiatement supérieure à la résistance de résistance de gamme intermédiaire utilisée dans la mesure précédente,
- une mesure de la résistance de codage avec toutes les valeurs de la résistance de gamme intermédiaire (RGi), jusqu'à ce que la valeur numérique (Vnum) soit supérieure à ladite valeur de seuil prédéterminée ou que la résistance de gamme (RG) ait déjà pris toutes les valeurs possibles, la valeur numérique (Vnum) étant alors désignée Vresult, et la résistance de codage déterminée suivant la relation : RP=RG*Vresult/(Vmax-Vresult).

4. Système de charge pour batterie (101) selon la revendication 3, **caractérisé en ce que** ladite valeur de seuil prédéterminée est définie comme le produit de ladite tension maximale connue (Vmax) par un coefficient Cmaxi positif et strictement inférieur à 1, déterminé en fonction du rang de la résistance de gamme intermédiaire (RGi) considérée, de la gamme des valeurs de la résistance de codage (RP) et du nombre et des valeurs (RGi) de la résistance de gamme (RG).

5. Système de charge pour batterie (101) selon l'une quelconque des revendications précédentes, **caractérisé en ce que** ledit câble de connexion comprend une pluralité de résistances de codage de valeurs différentes, et un commutateur manuel permettant à un utilisateur de sélectionner une valeur déterminée de résistance de codage parmi lesdites valeurs différentes.

6. Système de charge pour batterie (101) selon la revendication 5, **caractérisé en ce que** le commutateur manuel est formé par un commutateur rotatif à une pluralité N de positions permettant la sélection d'une valeur de résistance de codage parmi N valeurs disponibles.

7. Système de charge pour batterie (101) selon la revendication 5, **caractérisé en ce que** le commutateur manuel est formé par un commutateur rotatif à une pluralité N de positions permettant la sélection d'une valeur de résistance de codage parmi N valeurs disponibles, avec une résistance toujours connectée, les valeurs de résistance de codage étant déterminées par la mise en parallèle de la dite résistance toujours connectée et d'une résistance disposée en parallèle par ledit commutateur rotatif, ledit commutateur rotatif ayant également une position dans laquelle il ne dispose aucune résistance en parallèle.

8. Système de charge pour batterie (101) selon la revendication 5, **caractérisé en ce que** ledit câble de connexion comprend en outre des moyens d'affichage affichant au moins l'information de zone géographique et/ou d'état de l'installation électrique associée à la valeur de résistance de codage sélectionnée.

## Patentansprüche

1. Ladesystem für Akkumulator (101) eines Fahrzeugs, das Folgendes umfasst:
- eine Ladevorrichtung (103) des Akkumulators (101), die den Akkumulator (101) an eine Steckdose (14) einer Ladestation, die einen Wechselstrom liefert, über ein Anschlusskabel, das mit einem Stecker versehen ist, der an eine Steckdose, die auf dem Fahrzeug angeordnet ist, angepasst ist, anschließen kann, wobei das Kabel einen Codierwiderstand (RP) umfasst, der einen Widerstandswert aus einer Mehrzahl vorbestimmter Werte aufweist,
- eine Widerstandsmessvorrichtung (107), die der Ladevorrichtung (103) ein Signal liefert, das für den Wert des Codierwiderstands (RP) repräsentativ ist,
Ladesystem **dadurch gekennzeichnet, dass** die Ladevorrichtung (103) ausgelegt ist, um die Ladung des Akkumulators (101) in Abhängigkeit von einer Information des maximalen Stärkewerts des Stroms, die er verbrauchen kann, anzupassen, der durch den Mindestwert der maximalen Stärke definiert ist, die durch den Querschnitt des Anschlusskabels und mit der maximalen Stärke, die von einem lokalen Stromnetz einer gegebenen geographischen Zone zugelassen ist, definiert ist, und einer Information des Typs Boolesche Variable in Bezug auf das Laden des Fahrzeugs in einem Lademodus durch direktes Anschließen an eine Stromsteckdose des lokalen Stromnetzes, wobei jeder vorbestimmte Wert des Codierwiderstands einer gegebenen Definition der Informationen entspricht.

2. Ladesystem für Akkumulator (101) nach Anspruch 1, **dadurch gekennzeichnet, dass** die Widerstandsmessvorrichtung (107) aus einer Spannungsteilerschaltung gebildet ist, die von einer bekannten maximalen Spannung (Vmax) versorgt wird und aus dem Codierwiderstand (RP) und einem Bereichswiderstand (RG) gebildet ist, wobei die Ausgangsspannung (Vana) der Spannungsteilerschaltung von einem Analog-Digital-Wandler (ADC) in einen numerischen Wert (Vnum) umgewandelt wird, wobei Verarbeitungsmittel, die in der Widerstandsmessvorrichtung (107) enthalten sind, ausgelegt sind, um den Codierwiderstand (RP) gemäß der Gleichung RP=RG*Vnum/(Vmax-Vnum) zu bestimmen.

3. Ladesystem für Akkumulator (101) nach Anspruch 2, **dadurch gekennzeichnet, dass** der Bereichswiderstand (RG) aus einem einer Mehrzahl von Zwischenbereichswiderständen (RGi) gebildet ist, wobei ein elektronischer Wählschalter (20), der von den Verarbeitungsmitteln gesteuert wird, den geeigneten Bereichswiderstand bestimmt, indem ein Auswahlalgorithmus umgesetzt wird, der Folgendes ausführt:
- eine erste Messung mit dem Zwischenbereichswiderstand (RG1), dessen Wert der niedrigste ist, dann eine Messung des Codierwiderstands (RP), die zu einem numerischen Wert (Vnum) führt,
- einen Vergleich des numerischer Werts (Vnum) mit einem vorbestimmten Schwellenwert,
- falls der numerische Wert (Vnum) den vorbestimmten Schwellenwert überschreitet, eine neue Messung des Codierwiderstands (RP) mit dem Zwischenbereichswiderstand (RG2), dessen Widerstandswert unmittelbar größer ist als der Zwischenbereichswiderstand, der bei der vorhergehenden Messung verwendet wurde,
- eine Messung des Codierwiderstand mit allen Werten des Zwischenbereichwiderstands (RGi), bis der numerische Wert (Vnum) größer ist als der vorbestimmte Schwellenwert oder der Bereichswiderstand (RG) bereits alle möglichen Werte angenommen hat, wobei der numerische Wert (Vnum) Vresult genannt wird, und der Codierwiderstand gemäß der Beziehung RP=RG*Vresult/(Vmax-Vresult) bestimmt wird.

4. Ladesystem für Akkumulator (101) nach Anspruch 2, **dadurch gekennzeichnet, dass** der vorbestimmte Schwellenwert als das Produkt der maximalen bekannten Spannung (Vmax) mit einem positiven Koeffizienten Cmaxi, der strikt kleiner ist als 1, der in Abhängigkeit von dem Rang des betreffenden Zwischenbereichswiderstands (RGi), dem Bereich der Werte des Codierwiderstands (RP) und der Anzahl und der Werte (RGi) des Bereichswiderstands (RG) bestimmt wird, definiert ist.

5. Ladesystem für Akkumulator (101) nach einem der vorhergehenden Ansprüche, **dadurch gekennzeichnet, dass** das Anschlusskabel mehrere Codierwiderstände mit unterschiedlichen Werten umfasst, und einen manuellen Umschalter, der es einem Benutzer erlaubt, einen bestimmten Codierwiderstandswert aus den unterschiedlichen Werten auszuwählen.

6. Ladesystem für Akkumulator (101) nach Anspruch 5, **dadurch gekennzeichnet, dass** der manuelle Umschalter aus einem Drehschalter mit einer Mehrzahl N von Positionen gebildet ist, die die Auswahl eines Codierwiderstandswerts aus N verfügbaren Werten erlaubt.

7. Ladesystem für Akkumulator (101) nach Anspruch 5, **dadurch gekennzeichnet, dass** der manuelle Umschalter aus einem Drehschalter mit einer Mehrzahl N von Positionen ausgebildet ist, der die Auswahl eines Codierwiderstandswerts aus N verfügbaren Werten mit einem ständig angeschlossen Widerstand erlaubt, wobei die Codierwiderstandswerte durch das Parallelschalten des ständig angeschlossenen Widerstands mit einem Widerstand bestimmt werden, der parallel zu dem Drehschalter angeordnet ist, wobei der Drehschalter auch eine Position hat, in der er über keinen parallel geschalteten Widerstand verfügt.

8. Ladesystem für Akkumulator (101) noch Anspruch 5, **dadurch gekennzeichnet, dass** das Anschlusskabel außerdem Anzeigemittel umfasst, die mindestens die Information der geographischen Zone und/oder des Zustands der elektrischen Installation, die mit dem ausgewählten Codierwiderstandswert assoziiert ist, anzeigt.

## Claims

1. A charging system for a battery (101) of a vehicle including:
- a charging device (103) of the battery (101) being able to connect the battery (101) to a socket (14) of a recharging terminal delivering an alternating current, via a connection cable provided with a connector matching a socket arranged on the vehicle, said cable including a coding resistance (RP) having a resistance value from among a plurality of predetermined values,
- a resistance measuring device (107) delivering to the charging device (103) a representative signal of said value of the coding resistance (RP),
the charging system being **characterized in that** the charging device (103) is configured to adapt the charge of the battery (101) as function of information of the maximum amperage value of the current which it can consume defined by the minimum value of the maximum strength defined by the cross-section of the connection cable and of the maximum strength permitted by a local power grid of a given geographical area, and Boolean variable information relating to the charging of the vehicle in a charging mode by direct connection to a power socket of said local power grid, each predetermined value of the coding resistance corresponding to a given definition of said information.

2. The charging system for a battery (101) according to Claim 1, **characterized in that** the resistance measuring device (107) is formed by a voltage divider bridge supplied by a known maximum voltage (Vmax) and formed by the coding resistance (RP) and a range resistance (RG), the output voltage (Vana) of the divider bridge being converted into a digital value (Vnum) by an analog-to-digital converter (ADC), processing means comprised in the resistance measuring device (107) being configured to determine the coding resistance (RP) according to the relationship: RP=RG*Vnum(Vmax-Vnum).

3. The charging system for a battery (101) according to Claim 2, **characterized in that** the range resistance (RG) is formed from a plurality of intermediate range resistances (RGi), an electronic selector (20) driven by said processing means determining the suitable range resistance by implementing a selection algorithm realizing:
- a first measurement with the intermediate range resistance (RG1), the value of which is the lowest, then of realizing a measurement of the coding resistance (RP) leading a digital value (Vnum),
- a comparison of said digital value (Vnum) to a predetermined threshold value,
- if the digital value (Vnum) exceeds the said predetermined threshold value, a new measurement of the coding resistance (RP) with the intermediate range resistance (RG2), the resistance value of which is immediately greater than the intermediate range resistance resistance used in the preceding measurement,
- a measurement of the coding resistance with all the values of the intermediate range resistance (RGi), until the digital value (Vnum) is greater than the said predetermined threshold value or the range resistance (RG) has already taken all the possible values, the digital value (Vnum) being then designated Vresult, and the coding resistance determined according to the relation: RP=RG*Vresult/(Vmax-Vresult).

4. The charging system for a battery (101) according to Claim 3, **characterized in that** the said predetermined threshold value is defined as the product of the said known maximum voltage (Vmax) by a positive coefficient Cmaxi and strictly less than 1, determined as a function of the rank of the intermediate range resistance (RGi) concerned, of the range of values of the coding resistance (RP) and of the number and of the values (RGi) of the range resistance (RG).

5. The charging system for a battery (101) according to any one of the preceding claims, **characterized in that** the said connection cable includes a plurality of coding resistances of different values, and a manual switch permitting a user to select a determined coding resistance value from the said different values.

6. The charging system for a battery (101) according to Claim 5, **characterized in that** the manual switch is formed by a rotary switch with a plurality N of positions permitting the selection of a coding resistance value from N available values.

7. The charging system for a battery (101) according to Claim 5, **characterized in that** the manual switch is formed by a rotary switch with a plurality N of positions permitting the selection of a coding resistance value from N available values, with a resistance always connected, the coding resistance values being determined by the paralleling of the said resistance which is always connected and of a resistance arranged in parallel by the said rotary switch, the said rotary switch also having a position in which it does not have any resistance in parallel.

8. The system for charging a battery (101) according to Claim 5, **characterized in that** the said connection cable further includes display means displaying at least the information of geographical area and/or of the status of the electrical installation associated with the selected coding resistance value.
